# EUROPEAN PATENT APPLICATION

(11) **EP 4 715 003 A1**
(43) Date of publication of application: **25.03.2026**
(21) Application number: 24807104.5
(22) Date of filing: 09.05.2024
(51) Int. Cl.: C08J 5/18, C08L 83/04

(54) **THERMALLY CONDUCTIVE SHEET**

(30) Priority: 15.05.2023 JP 2023080036
(71) Applicant: SHIN-ETSU CHEMICAL CO., LTD., Tokyo 100-0005 (JP)
(72) Inventor: ITO, Takanori, Annaka-shi, Gunma 379-0224 (JP); ENDO, Akihiro, Annaka-shi, Gunma 379-0224 (JP)
(74) Representative: Schicker, Silvia
(86) International application number: PCT/JP2024/017187
(87) International publication number: WO 2024/237152

(57) **Abstract**

The present invention is a thermally conductive sheet of a cured product of a silicone composition, including: (a) organopolysiloxane having 2 to 10 alkenyl groups only in a side chain; (b) organohydrogenpolysiloxane having hydrosilyl groups at both ends; (c) a thermally conductive filler; (d) a platinum-based curing catalyst; and (e) dimethylpolysiloxane having one end blocked with a trialcoxysilyl group, wherein the thermally conductive sheet has a hardness of 7 or less, maximum stress of 0.7 MPa or less when compressed by 50% at a compression speed of 3 mm/min, residual stress of 0.1 MPa or more, and a ratio of the max stress to the residual stress of 7/1 or less. This can provide a thermally conductive sheet with excellent thermal conductivity, a small difference between maximum stress and residual stress, and a suitable balance between compressibility and resilience, as a heat dissipation member for automotive components.

## Description

### TECHNICAL FIELD

The present invention relates to a thermally conductive sheet.

### BACKGROUND ART

Due to the miniaturization and high integration of electronic components, there is a demand for a thermally conductive sheet that not only has excellent thermal conductivity but also low maximum stress during assembly, and is a soft sheet that imposes as little load as possible on heat-generating components. Patent Document 1 proposes a sheet that can follow an electronic component with low load by specifying average particle size of thermally conductive filler. Patent Document 2 reports an example in which the flexibility is improved by providing irregularities on the surface of a thermally conductive sheet, resulting in reduction of the compression load. Patent Document 3 proposes a sheet with excellent flexibility that exhibits a compressive residual stress of 0.1 MPa or less by specifying the viscosity of the polymer component.

However, in the cases of various electronic components for automotive, while the maximum stress during assembly is preferably low, they are also required to have the resilience (residual stress having a certain level or higher) to follow fluctuations, caused by vehicle vibrations after mounting, in the clearance between a thermally conductive sheet and an electronic component.

In other words, the thermally conductive sheet used in automotive environment needs to have a small difference between the maximum stress and the residual stress, and needs to have both ease in being compressed and adequate resilience associated with appropriate rubber elasticity, and thus further improvement was needed in this regard.

### CITATION LIST

### PATENT LITERATURE

Patent Document 1: JP2003-253136A
Patent Document 2: JP2001-217360A
Patent Document 3: JP6705067B1

### SUMMARY OF INVENTION

### TECHNICAL PROBLEM

The object of the present invention is to provide a thermally conductive sheet that has excellent thermal conductivity, a small difference between maximum stress and residual stress, and a suitable balance between compressibility and resilience, as a heat dissipation member for a wide range of automotive electronic components.

### SOLUTION TO PROBLEM

The present invention has been made to solve the above problems, and provides the following thermally conductive sheet.

That is, the present invention provides a thermally conductive sheet of a cured product of a silicone composition, comprising:
(a) organopolysiloxane having 2 to 10 alkenyl groups only in a side chain: 100 parts by mass;
(b) organohydrogenpolysiloxane having hydrosilyl groups at both ends: an amount such that the number of moles of the hydrosilyl groups falls within the range of 0.75 to 1.3 of that of moles of the alkenyl groups derived from the component (a);
(c) a thermally conductive filler: 1,000 to 4,200 parts by mass;
(d) a platinum-based curing catalyst: 0.1 to 1,000 ppm relative to the component (a) in terms of weight for platinum-group elements; and
(e) dimethylpolysiloxane having one end blocked with a trialcoxysilyl group: 15 to 200 parts by mass,
wherein the thermally conductive sheet has a hardness of 7 or less as measured by an ASKER Durometer Type C, maximum stress of 0.7 MPa or less as measured when the thermally conductive sheet having an initial thickness of 1.5 mm was compressed by 50% at a compression speed of 3 mm/min, residual stress of 0.1 MPa or more, and a ratio of the maximum stress to the residual stress of 7/1 or less.

Such a thermally conductive sheet has excellent thermal conductivity, a small difference between the maximum stress and the residual stress, and a suitable balance between compressibility and resilience.

The thermally conductive filler (c) is preferably one or more kinds selected from aluminum oxide, aluminum hydroxide, magnesium oxide, and aluminum nitride.

A thermally conductive sheet using such a thermally conductive filler has good thermal conductivity and filling properties.

The shape of the thermally conductive filler (c) may be shattered, rounded, or spherical.

The average particle size of the thermally conductive filler (c) is preferably 0.5 to 100 µm.

Those with an average particle size of 0.5 to 10 µm or those with shattered or rounded shapes can increase thermal conductivity by forming an efficient heat conduction path.

In this case, the thermally conductive sheet preferably has a thermal conductivity of 2.0 W/m-K or more.

When the thermal conductivity of the thermally conductive sheet is 2.0 W/m-K or more, the thermally conductive sheet can be applied to a heat-generating element that generates a large amount of heat.

### ADVANTAGEOUS EFFECTS OF INVENTION

According to the present invention, by appropriately crosslinking an organopolysiloxane having alkenyl groups only in a side chain with an organohydrogenpolysiloxane having hydrosilyl groups at both ends, it is possible to achieve a crosslink density within an appropriate range and obtain a silicone polymer that maintains good compressibility and residual stress.

Furthermore, by blending a thermally conductive filler, which imparts thermal conductivity, with a surface treatment agent having a trialkoxy group at one end, it is possible to strengthen the interaction between the filler surface and the polymer, improving residual stress.

Such a sheet has an excellent balance between maximum stress and residual stress, and therefore, it can be used for a variety of electronic components for automotive.

### DESCRIPTION OF EMBODIMENTS

Hereinafter, the present invention will be described, but the present invention is not limited thereto.

The inventor has explored a silicone composition that has a small difference between maximum stress and residual stress, which is desired for a thermally conductive sheet, and has both ease in being compressed and adequate resilience associated with appropriate rubber elasticity. As a result of the exploration, the inventors found that the above objects can be achieved by using a thermally conductive sheet of a silicone composition including: organopolysiloxane having 2 to 10 alkenyl groups only in a side chain; organohydrogenpolysiloxane having hydrosilyl groups at both ends; a thermally conductive filler; a platinum-based curing catalyst; and dimethylpolysiloxane having one end blocked with a trialcoxysilyl group, wherein the thermally conductive sheet has a hardness of 7 or less as measured by an ASKER Durometer Type C, maximum stress of 0.7 MPa or less as measured when the thermally conductive sheet having an initial thickness of 1.5 mm was compressed by 50% at a compression speed of 3 mm/min, residual stress of 0.1 MPa or more, and a ratio of the max stress to the residual stress of 7/1 or less. And then, the inventors have completed the present invention. Hereinafter, each component is described.

### (a) Organopolysiloxane having 2 to 10 alkenyl groups only in a side chain

The alkenyl-containing organopolysiloxane of the component (a) has 2 to 10 alkenyl groups only in the side chain portion of 1 molecule, and it is general that its main chain is basically composed of repeating units of diorganosiloxane and the both molecular chain ends are blocked with triorganosiloxy groups. The molecular structure may have a branched structure partly or may be cyclic, but it is preferably linear diorganopolysiloxane from the viewpoint of physical properties such as the mechanical strength of its cured product. Example of the component (a) include a structure represented by the following general formula (1).

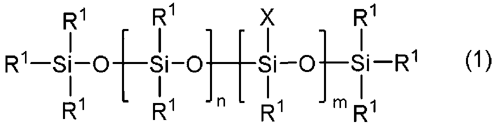

In the general formula (1), R¹ represents independently a group selected from an alkyl group having 1 to 10 carbon atoms, an aryl group having 6 to 10 carbon atoms, and an aralkyl group having 7 to 10 carbon atoms, "X" represents an alkenyl group having 2 to 6 carbon atoms, "n" represents 0 or an integer of 1 or more, and "m" represents an integer of 2 or more. The bonding of the siloxane units enclosed by parentheses, subscripted with "m" or "n", may be in a block or at random.

In the general formula (1), examples of R¹ include: alkyl groups, such as a methyl group, an ethyl group, a propyl group, an isopropyl group, a butyl group, an isobutyl group, a tert-butyl group, a pentyl group, a neopentyl group, and a hexyl group; cycloalkyl groups, such as a cyclopentyl group, a cyclohexyl group, and a cycloheptyl group; aryl groups, such as a phenyl group, a tolyl group, and a xylyl group; and aralkyl groups, such as a benzyl group and a 2-phenylethyl group. Typical examples are those having 1 to 7 carbon atoms, particularly typical examples are those having 1 to 5 carbon atoms, and preferable examples are alkyl groups, such as a methyl group, an ethyl group, and a propyl group, and a phenyl group.

In addition, part of the hydrogen atoms in these R¹ groups may be substituted with halogen atoms such as fluorine.

In the general formula (1), examples of the alkenyl group for "X" include those having 2 to 6 carbon atoms, such as a vinyl group, an allyl group, a propenyl group, an isopropenyl group, a butenyl group, and a hexenyl group. Among these, a vinyl group and an allyl group are preferable, and a vinyl group is particularly preferable.

In the general formula (1), "n" represents an integer of 0 or 1 or more, and "m" represents an integer of 2 to 10. Furthermore, "n" and "m" are preferably integers that satisfy 10≤n+m≤5,000, more preferably 50≤n+m≤1,000, and more preferably 100≤n+m≤500 and 0.001≤m/(n+m)≤0.05. The bonding of the siloxane units enclosed by parentheses, subscripted with "m" and "n" above, may be in a block or at random.

### (b) Organohydrogenpolysiloxane

The organohydrogenpolysiloxane of the component (b) must have two or more, preferably two to four, hydrogen atoms (hydrosilyl groups) directly bonded to a silicon atom per molecule, and hydrosilyl groups at both ends. When the hydrosilyl groups are fewer than two, there is a risk that the organohydrogenpolysiloxane will not cure.

Examples of the organohydrogenpolysiloxane include those having the structure represented by the general formula (2) below.

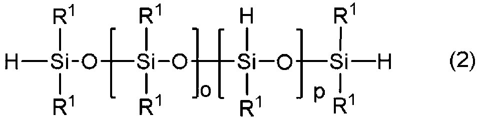

In the general formula (2), R¹ represents the same as defined above. "o" represents an integer of 0 or more and less than 200, and "p" represents an integer of 0 or more and less than 200. Bonding of the siloxane units enclosed by parentheses, subscripted with "o" and "p" above, may be bonded in a block or at random.

In the general formula (2), R¹ represents, as in the general formula (1), independently a group selected from an alkyl group having 1 to 10 carbon atoms, an aryl group having 6 to 10 carbon atoms, and an aralkyl group having 7 to 10 carbon atoms. Specific examples and preferable embodiments thereof include the same as those exemplified in the general formula (1). In the general formula (2), "o" represents an integer of 0 or more and less than 200, and "p" represents an integer of 0 or more and less than 200. These numerical values represent those for the average structural formula of the component (b), and do not limit the values for individual molecules. The bonding of the siloxane units enclosed by parentheses, subscripted with "o" and "p" above, may be in a block or at random.

The amount of the component (b) to be added is such that the amount of the hydrosilyl groups derived from the component (b) is 0.75 to 1.3 mol, preferably 0.78 to 1.25 mol, and more preferably 0.9 to 1.2 mol relative to 1 mol of the alkenyl groups derived from the component (a). When a sheet is formed by blending the component (b) within such a range, the difference between maximum stress and residual stress is reduced, resulting in a sheet with well-balanced compression properties.

### (c) Thermally conductive filler

As the thermally conductive filler of the component (C), it is possible to use: non-magnetic metals, such as copper and aluminum; metal oxides, such as aluminum oxide, silicon dioxide, magnesium oxide, beryllium oxide, titanium oxide, and zirconium oxide; metal nitrides, such as aluminum nitride, silicon nitride, and boron nitride; metal hydroxides, such as aluminum hydroxide and magnesium hydroxide; and substances that is considered generally as the thermally conductive fillers, such as artificial diamond and silicon carbide.

In particular, from the view point of thermal conductivity and fillability into silicone, it is preferable to use aluminum oxide, aluminum hydroxide, magnesium oxide, and aluminum nitride.

These thermally conductive fillers to be used preferably have an average particle size of 0.5 to 100 µm, more preferably 1 to 80 µm. One of these fillers may be used, or a plurality of them may be used in mixture. It is also possible to use two or more types of particles with different average particle sizes.

Note that the particle size of the thermally conductive filler is measured particle size distribution analyzer, which uses laser diffraction/scattering, such as a Microtrac MT3300EX (NIKKISO CO., LTD.), and the average particle size is a volume-based value (When a distribution of particle volumes is obtained and the particle distribution are divided into two groups using this average particle size as a border line, the volumes of particles having a larger average particle size are equal to those having a smaller average particle size.).

The shape of the thermally conductive filler (c) is preferably shattered, rounded, or spherical, and the fillers with different shapes can be used in combination. In particular, those *with an average particle size of 10 to 100 µm* are preferably spherical in the viewpoint of fillability, and those with an average particle size of 0.5 to 10 µm are preferably crushed or rounded because they can get into among fillers having a larger particle size and efficiently form heat conduction paths. In the present invention, the spherical refers to a thermally conductive filler with an aspect ratio of 1.5 or less, and the shattered or the rounded refers to a thermally conductive filler with an aspect ratio of more than 1.5.

Furthermore, the shattered has angular portions, and the rounded has a rounded shape.

The blending amount of the component (c) must be 1,000 to 4,200 parts by mass, preferably 1,500 to 3,800 parts by mass, relative to 100 parts by mass of the component (a). When this blending amount is less than 1,000 parts by mass, the resulting composition has poor thermal conductivity, and the thermally conductive sheet will have poor storage stability. On the other hand, when it exceeds 4,200 parts by mass, the sheet becomes hard and brittle, the maximum stress will increase, and achieving high compressibility becomes difficult.

### (d) Platinum-based curing catalyst

The platinum-based curing catalyst of the component (d) is a catalyst that promotes the addition reaction between the alkenyl group derived from the component (a) and the Si-H group derived from the component (b), and examples thereof include platinum-based catalysts that are well known as a catalyst used in a hydrosilylation reaction. Specific examples thereof include platinum group metal simple substance, such as platinum (including platinum black), rhodium, and palladium; platinum chlorides, such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, and Na₂HPtCl₄·nH₂O, wherein "n" represents an integer of 0 to 6, preferably 0 or 6; chloroplatinic acid and chloroplatinic acid salts; alcohol-modified chloroplatinic acid (see specification of US3220972A1); complexes of chloroplatinic acid with olefins (see specifications of US3159601A1, US3159662A1, and US3775452A1); platinum group metals, such as platinum black and palladium, supported on a carrier such as alumina, silica, and carbon; rhodium-olefin complex; chlorotris(triphenylphosphine)rhodium (Wilkinson's catalyst); and complex of platinum chloride, chloroplatinic acid or chloroplatinate with vinyl group-containing siloxane, particularly with vinyl group-containing cyclic siloxanes. The amount of the component (d) used is 0.1 to 1,000 ppm, preferably 1 to 500 ppm relative to the component (a), in terms of volume for platinum-group metal elements.

### (e) Dimethylpolysiloxane having one end blocked with a trialcoxysilyl group

The component (e) dimethylpolysiloxane having one end blocked with a trialcoxysilyl group is used as a surface treatment agent. Specifically, it can be represented by the following general formula (3).

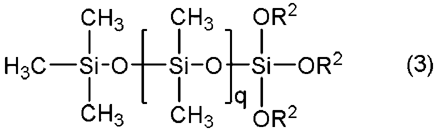

In the general formula above, R2 represents independently an alkyl group having 1 to 6 carbon atoms, preferably a methyl group or an ethyl group. "q" represents an integer of 5 to 100, preferably an integer of 10 to 60. The amount of the component (e) to be added is 15 to 200 parts by mass, preferably 30 to 150 parts by mass, relative to 100 parts by mass of the component (a). When the amount of the component (e) is less than 15 parts by mass, the wettability of the component (c) thermally conductive filler and the polymer is poor, resulting in poor sheet formability and poor maximum stress when being compressed. On the other hand, when the amount is more than 200 parts by mass, oil separation is likely to occur, the storage stability of the material become poor, or residual stress when being compressed is reduced.

### [Other Component]

In addition, it is possible to add effective amounts of various additives to improve functionality, such as reaction control agents for adjusting the curing rate, pigments and dyes for coloring, flame retardants, internal release agents for facilitating release from a mold or a separator film, and plasticizers for adjusting the viscosity of the composition and the hardness of the molded product.

Examples of the reaction control agents and plasticizer are given below, but the present invention is not limited thereto.

### [(f) Plasticizer]

The inventive composition can further contain an organopolysiloxane, as a plasticizer (f), which is represented by the following general formula (4) and has a kinematic viscosity of 10 to 100,000 mm²/s when measured at 25°C using a Cannon-Fenske viscometer.

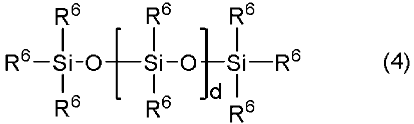

R⁶ represent each independently a monovalent hydrocarbon group containing 1 to 8 carbon atoms and having no aliphatic unsaturated bonds, and "d" represents an integer of 5 to 2,000.

The component may be used appropriately to impart properties such as viscosity adjuster to the thermally conductive composition, and is not particularly limited. One kind of them may be used, or two or more kinds may be used in combination.

R⁶ represents each independently a monovalent hydrocarbon group having 1 to 8 carbon atoms and not containing an aliphatic unsaturated bond, and is specifically a group selected from an alkyl group having 1 to 8 carbon atoms, an aryl group having 6 to 8 carbon atoms, and an aralkyl group having 7 to 8 carbon atoms. Examples include alkyl groups, such as a methyl group, an ethyl group, a propyl group, an isopropyl group, a butyl group, an isobutyl group, a tert-butyl group, a pentyl group, a neopentyl group, a hexyl group, a heptyl group, and an octyl group; cycloalkyl groups, such as a cyclopentyl group, a cyclohexyl group, and a cycloheptyl group; aryl groups, such as a phenyl group, an tolyl group, and an xylyl group; and aralkyl groups, such as a benzyl group, a phenylethyl group, a phenylpropyl group, and a methylbenzyl group. Preferable are a methyl group, an ethyl group, a propyl group, and a phenyl groups, and particularly preferable are a methyl group and a phenyl group.

The kinematic viscosity of the organopolysiloxane above, measured at 25°C with a Cannon-Fenske viscometer, is preferably 10 to 100,000 mm²/s, and particularly preferably 100 to 10,000 mm²/s. When the kinematic viscosity is 10 mm²/s or higher, the cured product of the resulting composition will not have oil bleeding. When the kinematic viscosity is 100,000 mm²/s or lower, the resulting thermally conductive composition will have good flexibility.

In the general formula (4), "d" may be any value that allows the kinematic viscosity of the organopolysiloxane to fall within the above-mentioned range, and is preferably an integer of 5 to 2,000, more preferably 10 to 1,000.

The amount of the component (f) contained in the inventive composition is not particularly limited, as long as it is an amount that achieves the desired effect as a plasticizer. Typically, it is preferably 1 to 20 parts by mass, more preferably 2 to 10 parts by mass, relative to 100 parts by mass of the component (a). When the amount of the component (f) is within the above range, the thermally conductive composition before curing tends to maintain good fluidity and workability, making it easy to fill a thermally conductive filler of the component (c) in the composition.

### [(g) Reaction Control Agent]

As a reaction control agent (g), any of the publicly known addition reaction control agents used ordinary for an addition reaction-curable silicone composition can be used as the reaction control agent. Examples include acetylene compounds, such as 1-ethynyl-1-hexanol and 3-butyn-1-ol; and various compound, such as nitrogen compounds, organic phosphorus compounds, oxime compounds, and organic chloro compounds. The amount used is preferably about 0.01 to 1 part by mass.

### [Viscosity of the composition]

The viscosity of the inventive thermally conductive silicone composition at 25°C is preferably 500 Pa·s or less, more preferably 350 Pa·s or less. Within this range, the thermally conductive silicone composition can be discharged by using a pomp, allowing for good yields in forming a thermally conductive sheet. A viscosity of 300 Pa·s or less is particularly preferrable, as it improves formability. There is no particular lower limit to the viscosity, but it is typically around 10 Pa·s.

Note that the viscosity is measured using a modular rheometer, model MARS40, manufactured by HAAKE.

### [Manufacturing Method of Thermally Conductive Sheets]

The thermally conductive sheet can be obtained by applying the inventive thermally conductive silicone composition onto a base material such as a resin film and curing the composition. The resin film can be selected from films that can withstand heat treatment after lamination and have a heat distortion temperature of 100°C or higher, such as PET, PBT, and polycarbonate for example. As the coating device for applying the organohydrogenpolysiloxane oil onto the resin film in a uniform thickness, it is possible to use a post-metering blade coater, a gravure coater, a kiss-roll coater, or a spray coater, which are used in coating in which the coating amount is measured after coating.

The curing conditions may be the same as those for publicly known as an addition reaction-curable silicone rubber composition, and the composition may be cured at room temperature, or may be heated as necessary. The curing is preferably performed at 100°C to 150°C for 1 to 40 minutes, more preferably at 110 to 130°C for about 10 to 20 minutes.

### [Hardness of Thermally Conductive Sheet]

The thermally conductive sheet preferably has a hardness of 7 or less, more preferably 5 or less, as measured at 25°C by an ASKER Durometer Type C. When the hardness exceeds 7, it is difficult to obtain the desired good maximum stress. The lower limit of the hardness is not particularly specified, but can be 1 or more.

### [Thermal Conductivity of Thermally Conductive Sheets]

The thermal conductivity of a molded body of the present invention is preferably 2.0 W/m-K or higher, more preferably 2.5 W/m-K or higher, as measured at 25°C by the hot disk method. When the thermal conductivity is 2.0 W/mK or higher, it can be applied to a heat-generating element with a large amount of heat generation. The upper limit of the thermal conductivity is preferably as high as possible, but it can be set to 5.0 W/m-K.

### [Compression Stress of Thermally Conductive Sheet]

The compression stress of the inventive thermally conductive sheet was measured using an AUTOGRAPH manufactured by Shimadzu Corporation.

This apparatus is equipped with a sample stage and a compression load cell. The thermally conductive sheet is sandwiched between aluminum plates of a specified size, placed on the stage, and compressed to a specified thickness by the load cell. When the thermally conductive sheet having an initial thickness of 1.5 mm was compressed by 50%, the maximum stress and the residual stress after stress relaxation by holding the compression for one minute were measured.

Detailed measurement conditions are described below.

### [Measurement Condition]

Sample: Round (diameter: 32 mm, thickness: 1.5 mm)
Aluminum plate size: Round (diameter: 32 mm, thickness: 2.0 mm)
Compression amount: 50%
Compression speed: 3 mm/min
Compression method: Trigger method (compression amount is counted after detecting a 2 N load)

In the present invention, when a thermally conductive sheet having an initial thickness of 1.5 mm is compressed by 50% at a compression rate of 3 mm/min, the maximum stress is 0.7 MPa or less, but the lower limit can be set to 0.1 MPa. The residual stress under the above compression conditions is 0.1 MPa or more, but the upper limit can be set to 0.7 MPa. Furthermore, the inventive thermally conductive sheet has a ratio of the maximum stress to the residual stress of 7/1 or less, and the lower limit can be set to 1.

Such a thermally conductive sheet has a small difference between the maximum stress and the residual stress and a good balance between compressibility and resilience. Therefore, it can be used in a variety of electronic components, including those for automotive.

### EXAMPLE

Hereinafter, the present invention will be specifically described with reference to Examples and Comparative Examples. However, the present invention is not limited thereto.

### [Preparation of Compositions]

The components (a) to (f) used in the following Examples and Comparative Examples are shown below.

### Component (a): Alkenyl group-containing organopolysiloxane

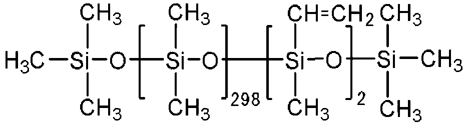

### Component (b): Organohydrogenpolysiloxane

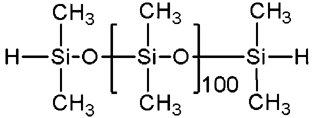

### Component (c):

Thermally conductive fillers with the following average particle sizes.
(c-1) Average particle size: 1 µm: Aluminum hydroxide
(c-2) Average particle size: 8 µm: Aluminum hydroxide
(c-3) Average particle size: 50 µm: Aluminum hydroxide
(c-4) Average particle size: 1 µm: Alumina
(c-5) Average particle size: 10 µm: Alumina
(c-6) Average particle size: 45 µm: Alumina
(c-7) Average particle size: 75 µm: Alumina

The above average particle sizes were measured using a Microtrac MT3300EX (Nikkiso).

### Component (d):

### 5% 2-ethylhexanol solution of chloroplatinic acid

### Component (e):

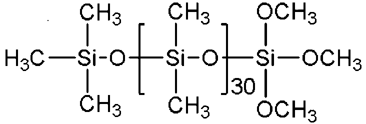

### Component (f):

### Dimethylpolysiloxane as a plasticizer

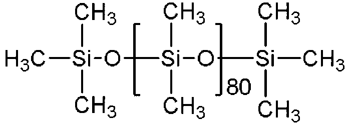

### Component (g):

### 3-butyn-2-ol as an addition reaction control agent

### [Examples 1 to 6 and Comparative Examples 1 to 6]

The components (a), (c), (e), and (f) were added in the specified amounts shown in Tables 1 and 2, and kneaded for 60 minutes using a planetary mixer.

The components (d) and (g) were added thereto in the specified amounts shown in Tables 1 and 2, and an effective amount of internal release agent to promote release from the separator was added, and the mixture was kneaded for a further 30 minutes.

Then the component (b) was added to the mixture in the specified amount shown in Tables 1 and 2, and the mixture was kneaded for 30 minutes, yielding a composition.

### [Method for Forming Thermally Conductive Sheet]

The obtained composition was poured into a mold of 60 mm x 60 mm x 6 mm or a mold of 170 mm x 130 mm x 1.5 mm and molded at 110°C for 10 minutes using a press molding machine.

### [Evaluation Method]

Hardness: The compositions obtained in Examples 1 to 6 and Comparative Examples 1 to 6 were cured into sheets having a thickness of 6 mm, and two of these sheets were stacked together and measured using an ASKER Durometer Type C. The results are shown in Tables 1 and 2.

Thermal conductivity: The compositions obtained in Examples 1 to 6 and Comparative Examples 1 to 6 were cured into sheets having a thickness of 6 mm, and the thermal conductivity of two of these sheets was measured using a thermal conductivity meter (TPA-501, product name, manufactured by Kyoto Electronics Manufacturing Co., Ltd.). The results are shown in Tables 1 and 2.

Compression stress: The compositions obtained in Examples 1 to 6 and Comparative Examples 1 to 6 were cured into thick sheets having a thickness of 1.5 mm, and the maximum stress and residual stress at 50% compression were measured under the conditions using the Shimadzu AUTOGRAPH described above. The results are shown in Tables 1 and 2.

**[Table 1]**

| Example | 1 | 2 | 3 | 4 | 5 | 6 |
|---|---|---|---|---|---|---|
| a | 100 | 100 | 100 | 100 | 100 | 100 |
| b | 39 | 37 | 48 | 55 | 50 | 39 |
| c-1 | 180 | 180 | | | 200 | 200 |
| c-2 | 370 | 370 | 788 | 788 | 100 | 100 |
| c-3 | 370 | 370 | | | 100 | 100 |
| c-4 | | | 1300 | 1300 | | |
| c-5 | | | 550 | 550 | | 500 |
| c-6 | 610 | 610 | | | 1400 | 1000 |
| c-7 | | | 1400 | 1400 | 800 | 700 |
| d | 0.4 | 0.4 | 0.4 | 0.4 | 0.4 | 0.4 |
| e | 48 | 40 | 160 | 180 | 120 | 120 |
| f | | | 10 | 10 | 5 | 5 |
| g | 0.2 | 0.2 | 0.2 | 0.2 | 0.2 | 0.2 |
| (c) Sum of components | 1530 | 1530 | 4038 | 4038 | 2600 | 2600 |
| H/Vi | 0.85 | 0.8 | 1.05 | 1.2 | 1.1 | 0.85 |
| (1) Hardness | 4 | 2 | 3 | 6 | 3 | 5 |
| (2) Thermal conductivity (W/mK) | 2.7 | 3 | 4.6 | 4.3 | 3.3 | 3.6 |
| (3) Compressive maximum stress (MPa) | 0.528 | 0.498 | 0.545 | 0.621 | 0.502 | 0.584 |
| (4) Compressive residual stress (MPa) | 0.118 | 0.109 | 0.132 | 0.152 | 0.112 | 0.125 |
| Compressive maximum stress / Compressive residual pressure | 4.47 | 4.57 | 4.13 | 4.09 | 4.48 | 4.67 |

**[Table 2]**

| Example | 1 | 2 | 3 | 4 | 5 | 6 |
|---|---|---|---|---|---|---|
| a | 100 | 100 | 100 | 100 | 100 | 100 |
| b | 69 | 28 | 48 | 55 | 39 | 48 |
| c-1 | 180 | 180 | | | 200 | 200 |
| c-2 | 370 | 370 | 1200 | 200 | 100 | 100 |
| c-3 | 370 | 370 | | | 100 | 100 |
| c-4 | | | 1700 | 200 | | |
| c-5 | | | 800 | 100 | | 500 |
| c-6 | 610 | 610 | | | 1400 | 1000 |
| c-7 | | | 1500 | 300 | 800 | 700 |
| d | 0.4 | 0.4 | 0.4 | 0.4 | 0.4 | 0.4 |
| e | 48 | 40 | 180 | 20 | 5 | 300 |
| f | | | 10 | 10 | 5 | 5 |
| g | 0.2 | 0.2 | 0.2 | 0.2 | 0.2 | 0.2 |
| (c) Sum of components | 1530 | 1530 | 5200 | 800 | 2600 | 2600 |
| H/Vi | 1.5 | 0.62 | 1.05 | 1.2 | 0.85 | 1.05 |
| (1) Hardness | 10 | 0.5 | 6 | 3 | 5 | 3 |
| (2) Thermal conductivity (W/mK) | 2.5 | 3.3 | 5.1 | 1.2 | 3.9 | 2.5 |
| (3) Compressive maximum stress (MPa) | 0.895 | 0.395 | 0.782 | 0.458 | 0.835 | 0.415 |
| (4) Compressive residual stress (MPa) | 0.205 | 0.072 | 0.158 | 0.142 | 0.179 | 0.072 |
| Compressive maximum stress / Compressive residual pressure | 4.37 | 5.49 | 4.95 | 3.23 | 4.66 | 5.76 |

In Examples 1 to 6, thermally conductive sheets were molded within the ranges described in the present invention, and exhibited good thermal conductivity. The ratio of the maximum stress to the residual stress at 50% compression was 7/1 or less, making it possible to provide a heat dissipation member suitable for automotive electronic components, etc.

In Comparative Example 1, the ratio of the number of moles of the hydrosilyl groups derived from the component (b) to the number of moles of the vinyl groups derived from the component (a) (H/Vi) exceeded 1.3, which increased the maximum stress of the sheet and made it difficult to achieve high compression. In Comparative Example 2, the ratio of H/Vi was below 0.75, which made the residual stress of the sheet below 0.1 MPa and made it difficult to achieve high resilience.

In Comparative Example 3, the amount of the thermally conductive filler exceeded 4,200 parts by mass, resulting in the maximum stress of the sheet exceeding 0.7 MPa and poor compressibility. In Comparative Example 4, the thermally conductive filler was contained below 1,000 parts by mass, resulting in poor thermal conductivity and making it difficult to apply to a high-heat generating element.

In Comparative Example 5, the amount of the surface treatment agent was contained in less than 15 parts by mass, so the maximum stress of the sheet was high and making it difficult to achieve high compression. In Comparative Example 6, the amount of the surface treatment agent was more than 200 parts by mass, so the residual stress of the sheet decreased and there was a problem with resilience.

The present specification includes the following aspects.
[1] A thermally conductive sheet of a cured product of a silicone composition, comprising:
   (a) organopolysiloxane having 2 to 10 alkenyl groups only in a side chain: 100 parts by mass;
   (b) organohydrogenpolysiloxane having hydrosilyl groups at both ends: an amount such that the number of moles of the hydrosilyl groups falls within the range of 0.75 to 1.3 of the number of moles of the alkenyl groups derived from the component (a);
   (c) a thermally conductive filler: 1,000 to 4,200 parts by mass;
   (d) a platinum-based curing catalyst: 0.1 to 1,000 ppm relative to the component (a) in terms of weight for a platinum group elements; and
   (e) dimethylpolysiloxane having one end blocked with a trialcoxysilyl group: 15 to 200 parts by mass;
   wherein the thermally conductive sheet has a hardness of 7 or less as measured by an ASKER Durometer Type C, maximum stress of 0.7 MPa or less as measured when the thermally conductive sheet having an initial thickness of 1.5 mm was compressed by 50% at a compression speed of 3 mm/min, residual stress of 0.1 MPa or more, and a ratio of the max stress to the residual stress of 7/1 or less.
[2] The thermally conductive sheet of the above [1], wherein the thermally conductive filler (c) is one or more kinds selected from aluminum oxide, aluminum hydroxide, magnesium oxide, and aluminum nitride.
[3] The thermally conductive sheet of the above [1] or [2], wherein the shape of the thermally conductive filler (c) is shattered, rounded, or spherical.
[4] The thermally conductive sheet of any one of the above [1] to [3], wherein the thermally conductive filler (c) has an average particle size of 0.5 to 100 µm.
[5] The thermally conductive sheet of any one of the above [1] to [4], wherein the thermally conductive sheet has a thermal conductivity of 2.0 W/m-K or more.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A thermally conductive sheet of a cured product of a silicone composition, comprising:
(a) organopolysiloxane having 2 to 10 alkenyl groups only in a side chain: 100 parts by mass;
(b) organohydrogenpolysiloxane having hydrosilyl groups at both ends: an amount such that the number of moles of the hydrosilyl groups falls within the range of 0.75 to 1.3 of the number of moles of the alkenyl groups derived from the component (a);
(c) a thermally conductive filler: 1,000 to 4,200 parts by mass;
(d) a platinum-based curing catalyst: 0.1 to 1,000 ppm relative to the component (a) in terms of weight for a platinum group elements; and
(e) dimethylpolysiloxane having one end blocked with a trialcoxysilyl group: 15 to 200 parts by mass,
wherein the thermally conductive sheet has a hardness of 7 or less as measured by an ASKER Durometer Type C, maximum stress of 0.7 MPa or less as measured when the thermally conductive sheet having an initial thickness of 1.5 mm was compressed by 50% at a compression speed of 3 mm/min, residual stress of 0.1 MPa or more, and a ratio of the max stress to the residual stress of 7/1 or less.

2. The thermally conductive sheet according to claim 1, wherein the thermally conductive filler (c) is one or more kinds selected from aluminum oxide, aluminum hydroxide, magnesium oxide, and aluminum nitride.

3. The thermally conductive sheet according to claim 1, wherein the shape of the thermally conductive filler (c) is shattered, rounded, or spherical.

4. The thermally conductive sheet according to claim 1, wherein the thermally conductive filler (c) has an average particle size of 0.5 to 100 µm.

5. The thermally conductive sheet according to claim 1, wherein the thermally conductive sheet has a thermal conductivity of 2.0 W/m-K or more.
